# EUROPEAN PATENT SPECIFICATION

(11) **EP 1 797 725 B1**
(45) Date of publication and mention of the grant of the patent: **20.08.2008**
(21) Application number: 05791993.8
(22) Date of filing: 07.09.2005
(51) Int. Cl.: H04Q 3/00, H04M 3/487

(54) **OPTIMISED CONTROL OF TRAFFIC LOAD ON SWITCHES IN A COMMUNICATION NETWORK**
OPTIMIERTE STEUERUNG DER VERKEHRSLAST AUF VERMITTLUNGSEINRICHTUNGEN IN EINEM KOMMUNIKATIONSNETZ
REGULATION OPTIMISEE DE LA CHARGE DE TRAFIC SUR DES COMMUTATEURS DANS UN RESEAU DE COMMUNICATION

(30) Priority: 07.09.2004 NO 20043740; 10.11.2004 US 984817
(43) Date of publication of application: 20.06.2007
(73) Proprietor: Unified messaging systems as, Nydalen, N-0402 OSLO (NO)
(72) Inventor: HEEN, Kjell-Harald, N-1087 Oslo (NO); HAGA, Nils, N-1415 Oppegard (NO)
(74) Representative: Briddes, Sam
(86) International application number: PCT/NO2005/000321
(87) International publication number: WO 2006/028381

(56) References cited:
- US-A1- 2002 176 545
- US-A1- 2004 103 158

## Description

### TECHNICAL FIELD

The present invention describes a method, a system and a computer program for carrying out effective warning of the population in a specific geographical area. In more specific terms, a method, a system and a computer program are described for optimised control of traffic load in the form of message exchanges on one or more switches in a fixed telephony and/or mobile telephony communication network.

### BACKGROUND TO THE INVENTION

The problems associated with disasters and accidents are receiving an ever-increasing amount of public attention. Much of this is connected with the way in which society has developed into a communication society. The media seize on such events, thereby helping to inform the population that a disaster and accident has occurred. Society, moreover, has become much more complex, and in most cases people are involved in or directly or indirectly affected by a disaster or accident. People may experience disasters or accidents in their homes, at their place or work, or when travelling by various forms of transport. Situations may also arise in towns, in densely built-up areas, on roads, in transport systems as well as in buildings, in factory works, etc. Transport of goods, the use of aircraft, busses and trains may also result in undesirable events. Weather conditions such as, for example, tornadoes, floods, rain, lightning, pollution, etc. are also a cause of disasters and accidents. In addition to this, epidemics or other diseases may occur involving one or more people. All of these situations give grounds for providing timely and necessary information to those involved, whether they be individuals in the midst of the disaster or accident, the relief team on the way to a situation or located on the spot or within the accident or disaster area, or persons or groups such as families, businesses, organisations, etc. requiring or needing information. Exercise-type situations may also be involved or situations where for social reasons the necessary planning must be carried out in advance of a likely disaster or accident, where there is a need to supervise and control the flow of information.

A special characteristic of disasters and accidents is to be able to ensure and safeguard the need for information by means of telecommunication. In this context, telecommunication refers to fixed telephony and communication by means of terminals such as mobile telephones and/or PDA's. When a disaster or accident goes through its cycle from start to finish, a great need is created for information to and between the parties involved, as well as incoming and outgoing communication.

Furthermore, problems often arise with the communication infrastructure, such as, for example, when communication exchanges and switches are knocked out or literally overwhelmed by the fast and uncontrolled build-up of requests for new network connections of data communication and/or calls, together with implementation of ongoing data exchanges and calls. There is a need to control and optimise message exchange via several switches in a network in situations involving undesirable events as described above.

Patents exist involving various aspects of communication supervision and control during an event such as an accident or disaster, where there is a wish to control and supervise the communication via a switch.

US-6.169.894 describes how geographically determined information can be passed to a mobile telephone. The patent describes a broadcasting method, "outbound broadcasting", where the network capacity can be maximised. The method can temporarily overrule the mobile telephone, provided the mobile (the user) has made himself available to the service.

US-6.694.132 describes a method for "outbound broadcasting" which is geographically determined, where one communicates via a fixed and mobile telephony network. Databases, graphic information and text/voice messages form the basis for actions. The telephone operator performs the broadcasting. Broadcasting is primarily operated by the area's dialling code (i.e. focussed on fixed telephony).

US 2002/176545 A1 describes an apparatus and a method for broadcasting an emergency warning over a telephone network.

A significant drawback of these patents is that they fail to arrange for an optimal message exchange via one or more switches by controlling and optimising the communication load via the selected switches.

The trouble with today's solutions is that on account of the development or scope of the disaster or accident, problems may be encountered in alerting a selected population group via a fixed and/or mobile telephony network within the geographical areas affected by the situation.

The capacity of the telephony infrastructure in the various countries such as, for example, Norway and internationally is developed according to population density and anticipated communication requirements. For example, a small municipality with a population of 5-6000 inhabitants seldom has the capacity to handle more than 2-300 simultaneous calls. A warning that does not deal with scaling in relation to receiving capacity can thereby completely overload the network, resulting in unpredictable consequences such as, for example, where critical outgoing telephone traffic cannot get through.

Thus a highly specific and obvious need exists to take care of, control and optimise the communication via a switch related to a disaster or accident.

The present invention takes care of this function.

### BRIEF DESCRIPTION OF THE INVENTION

The present invention describes a method, a system and a computer program for controlling and optimising message exchange via one or more switches in a communication network, which may consist of fixed telephony and/or mobile telephony switches within a geographical area.

The method describes how a method is provided for control and optimisation of messages sent via one or more switches in a network.

The method, the system and computer program are described in greater detail in the associated set of claims.

### DETAILED DESCRIPTION OF THE INVENTION

The invention will now be described in more detail with reference to the figures, in which:
Figure 1 illustrates the course of process control of an undesirable event.
Figure 2 is a flow chart illustrating the process that is carried out.
Figure 3 is a flow chart elaborating on step 200 in figure 2.
Figure 4 is a flow chart elaborating on step 300 in figure 2.
Figure 5 is a flow chart elaborating on step 400 in figure 2.
Figure 6 is a flow chart elaborating on step 500 in figure 2.
Figure 7 is a flow chart elaborating on step 600 in figure 2.
Figure 8 illustrates the course of a warning.

The method according to the invention consists of main elements, which will now be described in greater detail. The main elements form a link in a continuous process, which will proceed as long as considered advisable for an undesirable event such as a disaster, accident or exercise.

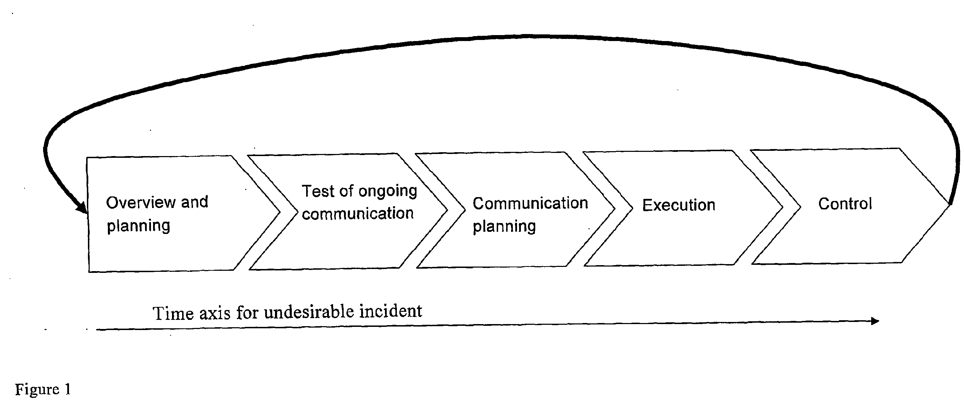

Figure 1 indicates how modules are joined together to form one process, which consists of a method with several steps, plus a system for executing the method.

The first module in figure 1 is described as "Overall view and planning", and is characterised by a method for establishing an overall view and planning measures. This may contain a database with, for example, telephone numbers, names and addresses, combined with, for example, a GIS (Geographical Information System) system.

A second module is described as "Test of ongoing communication" and is characterised by a method for revealing the load via a fixed and/or mobile network associated with the geographical area. This is done in the form of a test by transmitting a representative number of messages in order to reveal the resulting load.

A third module is described as "Communication planning" and is characterised by a method for arranging communication.

A fourth module is described as "Implementation" and is characterised by a method for delivering messages or delivering messages where an answer is expected.

The fifth and final module is described as "Control" and is characterised by a method for revealing the degree of communication density based on actions.

All the modules illustrated in figure 1 together create a total solution for controlling and optimising message exchange via one or more switches when an undesirable event occurs. The present invention is based on the process, methods and selected systems, which together create a whole.

The module "Overall view and planning" is based on existing systems that can deliver information of a geographical and demographic nature, together with lists of people with data such as, for example, telephone number. The module should be able to supply information on individuals, based on their role or duties during a disaster or accident, i.e. involving relief or support personnel, people responsible for critical public services such as electricity supply, water supply, traffic flow, etc., together with information on occupants per household, employees in various work places, those present on a permanent or temporary basis such as, for example, visitors, employees etc. located within a given geographical area. By means of various techniques the module should be able to compare qualified lists that form the basis for deciding priority of communication such as, for example, in the form of message transmissions to message transmissions where a specific acknowledgement is required.

The module "Test of ongoing communication" is characterised by a method for revealing as soon as possible the degree to which a switch or a network of switches is loaded with regard to communication. Based on this, further measures may be taken, such as, for example, terminating calls and/or establishing priority lists of those who can be permitted to transmit messages and thereby establish calls. By reading the status of RSO (Remote Switch Overload), an overall view is obtained of the loading on switches within a selected geographical area. During the development of an undesirable event, communication can often grow in an uncontrolled manner. For this reason it is vital to establish control of the situation quickly as a basis for planning and implementing the further activities and measures.

The module "Communication planning" is characterised by a method for assigning destination addresses for an order of priority for warning. By performing an advance grouping of telephone numbers evenly distributed over available switches within the selected geographical area, the chance of overloading the network is reduced.

The module "Implementation" is characterised by a method for starting up the actual message transmission for a geographical area, distributed between one or more selected switches. The method contains elements of control and optimisation of message exchange via one or more switches, beginning with transmitting a number of simultaneous messages defined, for example, as the initial number. The number of messages transmitted can be adjusted upwards or downwards depending on the load on the switches involved.

In the module "Control" the opportunity is given to monitor the load on the communication by means of RSO. Based on the load revealed, the message exchange can be optimised by increasing or reducing the number of simultaneous messages. This will be an iterative process as long as there is a need to inform selected groups of the population.

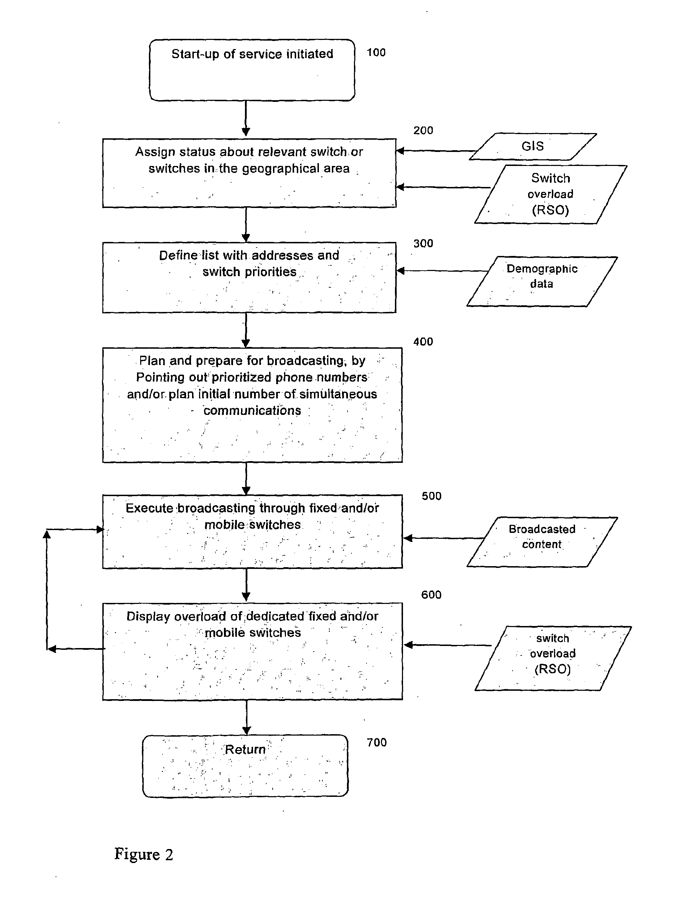

Figure 2 is a flow chart illustrating the process implemented according to the invention, where the basis is created in a systematic manner for controlling and optimising the message exchange via one or more switches in a network within a geographical area. The figure represents the process described in figure 1.

The process starts at step 100 with activation and initiation. In step 200 the status of relevant switches is established by, for example, performing a test where a number of messages are transmitted simultaneously. The load within the geographical area is thereby clarified by reading RSO (Remote Switch Load) from the area's switches. The status can be presented together with other relevant data in a GIS (Geographical Information System) system. Important information such as buildings, roads, etc. can be entered in a GIS system, thus providing a fast, overall view of the selected geographical area. The GIS system will form the basis of a decision support tool during the undesirable event or the exercise.

In step 300 a qualified list of names and telephone numbers is established, which will deliver messages by means of broadcasting technology. The list is developed by means of access to various databases, which, for example, may contain demographic data.

In step 400 the implementation is prepared of a message exchange to selected telephone numbers. Depending on anticipated or actual revealed load on the network's switches, a list can be defined of originator telephone numbers that will receive the highest priority when calling via selected switches. These prioritised telephone numbers are called pri-numbers. Together the pri-numbers will form a pri-list. The pri-list must be sent to one or more selected network operators, who implement the pri-list on the switches within the selected geographical area. An alternative or complementary measure may be for the operator to go in and terminate all or selected connections. The content of the message that has to be broadcast is compared. The message may be of the information type or a reply can be expected in the form of, for example, a keystroke on the telephone or a verbal confirmation.

In step 500 an implementation is performed of the planned broadcasting via fixed and/or mobile switches. This is done by simultaneously ringing an initially defined number of telephone numbers. This initial number is based on a set of rules. Calling and broadcasting of messages is a continuous process. The number of simultaneous calls is adjusted as the degree of load on the switches involved is revealed. The number of calls at any time is thereby optimised, thus enabling the greatest possible number of messages to get through as quickly as possible to the appointed list of telephone numbers through the network.

In step 600 the status of ongoing message exchange is displayed, controlled and optimised. The degree of loading on one or more switches is revealed by retrieving data from RSO. Based on the revealed load, the number of simultaneous message exchanges is adjusted upwards or downwards. These changes are undertaken on the basis of a set of rules. Based on the new figure for total number of simultaneous message exchanges, message exchange continues as indicated in step 500 until the system has worked its way through the selected list of telephone numbers.

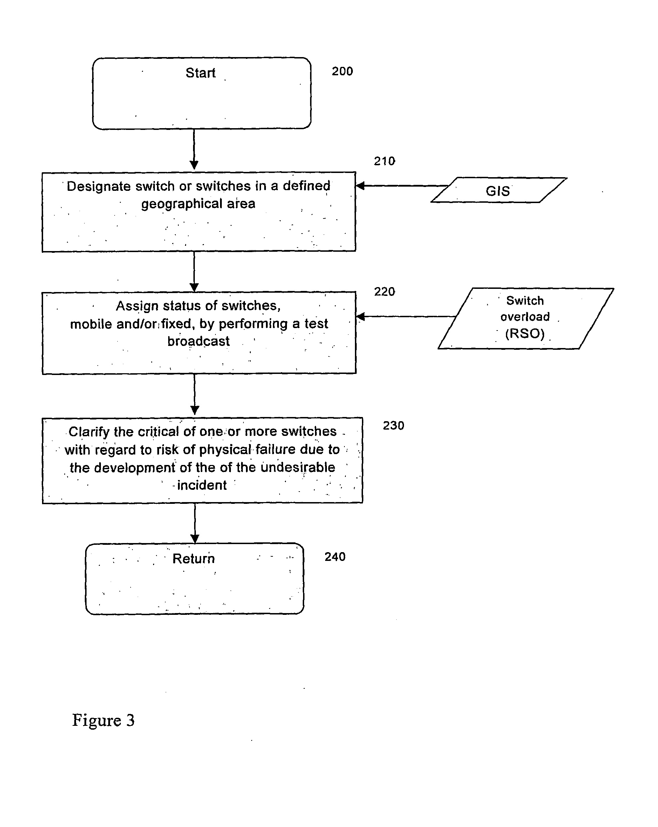

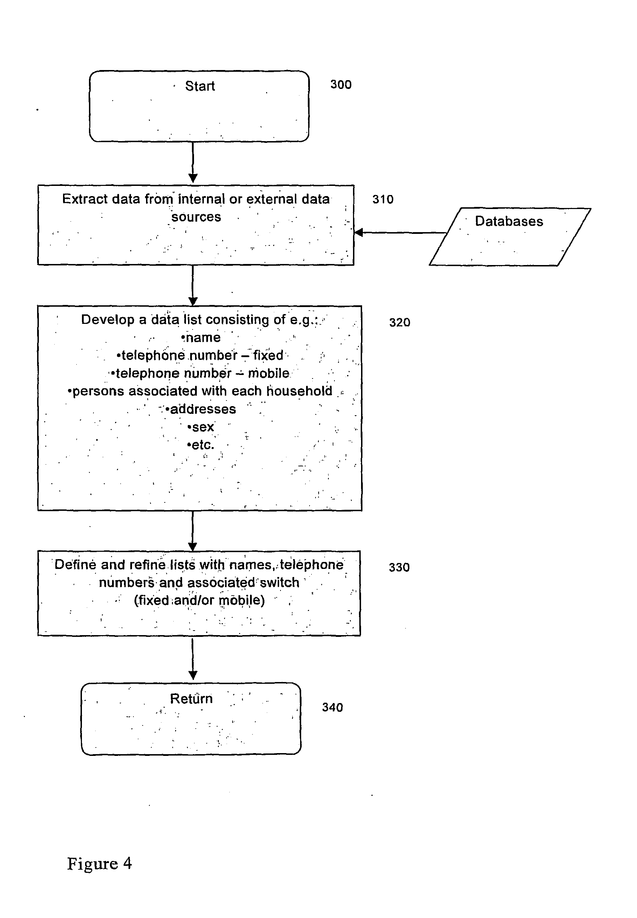

Figure 3 elaborates on step 200, which starts up a process 210 where a specific geographical area with associated switches is selected where an undesirable event or exercise is expected to occur or has occurred. A GIS system is employed, for example, to give information on location of switches, infrastructure, population matters, etc. In step 220 a test is carried out with a view to revealing the load on any switches in an indicated geographical area. The test is performed by transmitting a simultaneous number of messages based on a set of rules. Based on this, the communication status of the selected switch or switches is deduced by reading issued RSO messages. In the next step 230 any risk of drop-out of one or more switches is clarified based on the scope and development of the undesirable event. There may be a need to complement or replace switches, for example by a transportable switch within the geographical area concerned. In step 240 the process continues to step 300 as illustrated in figures 2 and 4.

Figure 4 elaborates on step 300. In step 310 data consisting of telephone numbers, subscribers, etc. are extracted based on various external and/or internal databases. A list is developed, which may be dynamic or static, giving a survey of which telephone numbers (fixed and mobile) have to be contacted and any names of subscribers, number and names of persons associated with the telephone number, address, gender, age, etc. In step 320 a total list is established consisting of, for example, telephone numbers, name and address. The said list specifically represents all those with whom communication has to be made, and the list forms a total overall view from which to begin a stepwise communication exchange, where those who are most at risk are selected, etc. In step 330 selection and structuring of the list are performed via telephone numbers based on a set of rules.

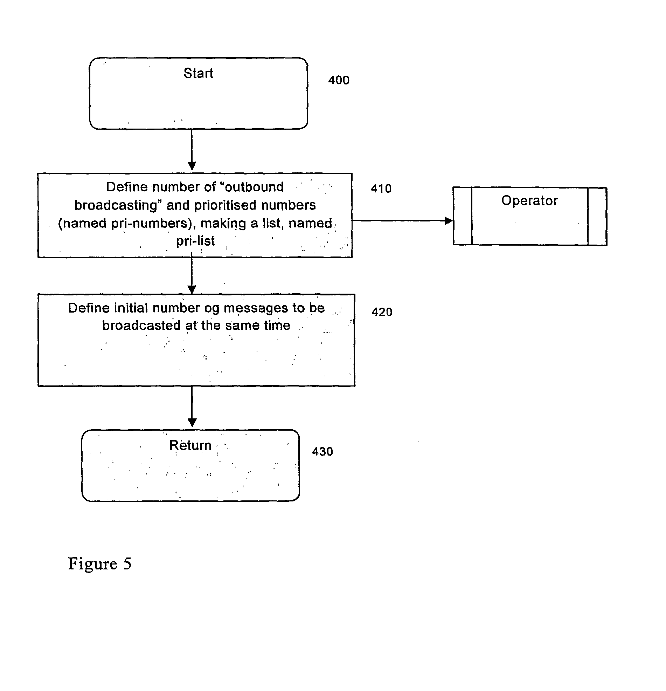

An example of strategy is to exploit the fixed telephone numbers' identification of switch, i.e. a part of a fixed telephone number indicates a switch assigned to a regional area. In other words fixed telephone numbers are grouped according to localisation of switch number with a regional location. There will usually be a network of mobile transmitters in a geographical area. Mobile transmitters are very prone to overload during disasters, accidents and exercises. When transmitting messages, the possibility exists of cooperating with network operators to influence or guide messages to a selected mobile transmitter, thus optimising the message transmission and making the most of the network capacity. In step 340 the process continues to step 400 as illustrated in figures 2 and 5.

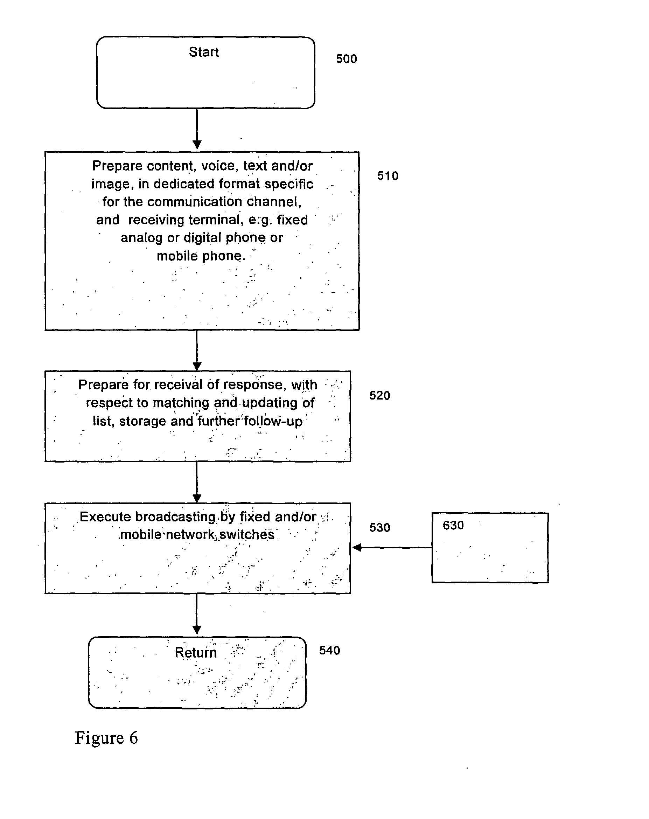

Figure 5 describes in step 410 how to prepare transmission of a message by defining a list consisting of prioritised originator telephone numbers. Each such prioritised originator telephone number is called a pri-number. A pri-number is a number that always receives priority when calling via a specific switch. The said pri-list is transmitted to the network operator(s) who implement the pri-list on one or more selected switches. In order to free capacity on one or more switches, both fixed and mobile, ongoing calls may be terminated in collaboration with network operators, thereby freeing capacity for a meaningful message exchange. In step 420 the number of simultaneous messages that are to be broadcast is defined. This number is based on the test that may have been carried out in step 220. One usually begins with an initial number of calls, based on a set of rules. The set of rules may be based on experience, type of switch and network, population size, etc. In step 430 the process continues to step 500 as illustrated in figures 2 and 6.

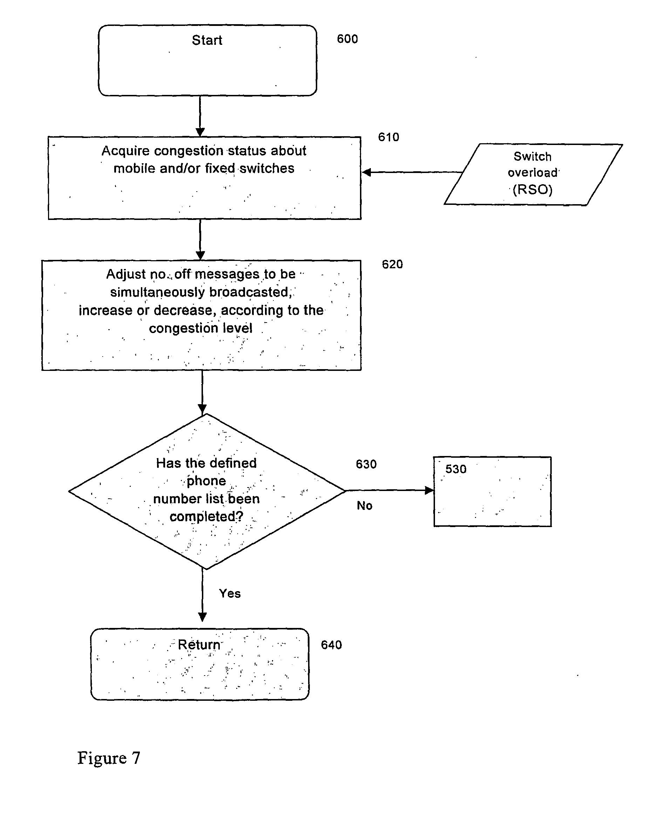

Figure 6 describes with step 510 how to prepare the content of the message, for example as speech, text and/or image, together with any anticipated response. The message and its content must be adapted to the receiver's terminal, for example a mobile telephone or fixed telephone. In step 520 the system is arranged for logging and storing responses from the receiver to received messages. This response can be exported for further processing or it can be matched against the original list, thus permitting quality assurance of the person with whom contact has been established and their specific answer. An example of the type of response may be that the receiver is asked to press key 1 in order to hear the message again, key 2 for medical assistance, etc. In step 530 the simultaneous message exchange is performed according to the plans that have been made. The transmission takes place by message exchanges being transmitted simultaneously to the extent initially defined. As the message is received and terminated by the individual receiver, new message exchanges are continuously being initiated, thus maintaining the defined number of simultaneous exchanges. In step 540 the process continues to step 600 as illustrated in figures 2 and 7.

Figure 7 describes how to reveal the degree of load on the switch(es) in the selected geographical area as a result of the ongoing message exchange. Step 610 reads the status from RSO for the individual switches, both fixed and/or mobile telephony. In step 620 the extent is clarified to which the number of simultaneously ongoing calls should be increased or reduced as a consequence of the status of the load (congestion). This is a control and optimisation of message exchange based on a set of rules. The object is to have information distributed as quickly as possible to the defined list via telephone numbers within a geographical area. As long as there are telephone numbers that have to be contacted, it is decided in step 630 whether further ringing of telephone numbers should continue. If this is the case, the process will continue in step 530 as illustrated in figure 6. In step 640 the process is terminated as illustrated in step 700 in figure 2.

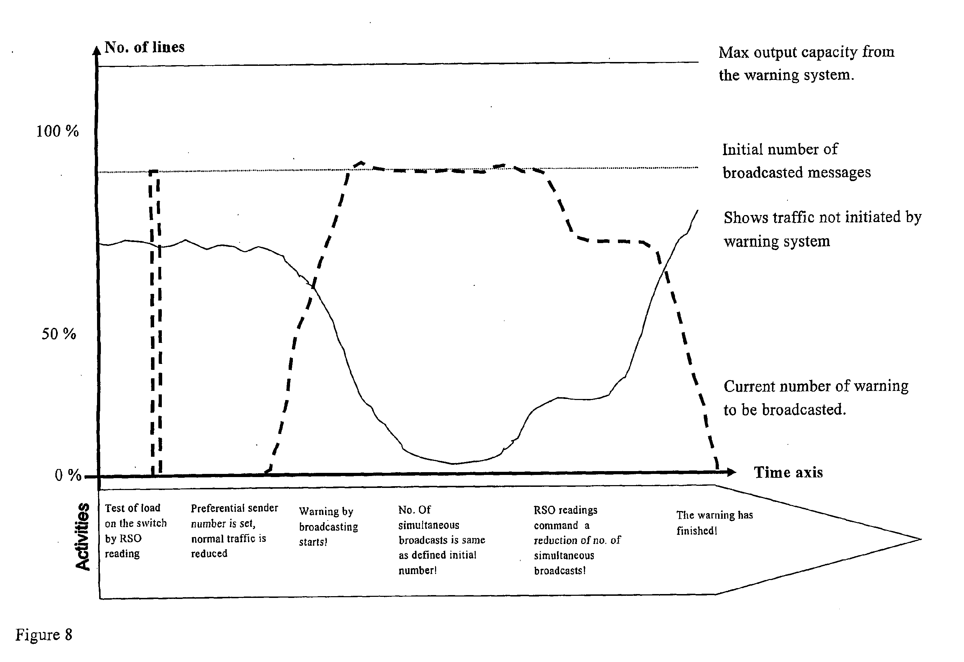

Figure 8 illustrates the course of a warning. This may, for example, be during an exercise. Alerting a population group in a selected geographical area should be performed via fixed and/or mobile telephony based on the present invention.

A test is carried out by transmitting a number of simultaneous messages. The object is to reveal the load on the relevant switch. By reading the received RSO message, the ongoing communication load via the relevant switch is revealed. In this example the option is chosen to transmit a number of messages, so-called initial value, based on experience and knowledge of the switch and the location. An alternative option is to transmit a lower or higher number of messages. By reading RSO the degree of load is revealed. There may, for example, be a need to perform more tests before implementing the actual message transmission.

Depending on the degree of load revealed, the level of the simultaneous number of messages to be broadcast is selected. In this case the initial number of messages, i.e. the initial value, is maintained.

The message broadcasting is undertaken from defined priority numbers, i.e. pri-numbers. These numbers are given priority over other numbers that might try to make a call via the appointed switch.

As normal traffic is reduced by calls being terminated, the corresponding number of ongoing message transmissions at any time increases. The number increases until the defined initial value of number of broadcasts is attained.

The degree of load (RSO) is read continuously. Depending on changes or the level of the load, the number of ongoing message transmissions at any time can be adjusted upwards or downwards. In this case the number is adjusted downwards, since it was revealed by the RSO reading that the degree of load on the switch had increased.

The message transmission is terminated. A message transmission has therefore been implemented to a defined list of receivers. Depending on the degree of success in coming into contact with all the receivers, several calls may have been made to the numbers where attempts to establish contact were unsuccessful. Finally, the status is summed up and those receivers with whom it was not possible to establish contact are transferred, for example, to a new list for further processing.

The number of ordinary calls increases as the availability via the switch increases.

Depending on the development of the situation, the course of events described here may be repeated several times to the same receivers or to new receivers.

## Claims

1. A method for optimised control of traffic load, in the form of message exchanges, on one or more switches in a fixed telephony and/or mobile telephony communication network for maximum exploitation of the capacity of the switch when an undesirable event occurs in a specific geographical area, **characterised in that** the method comprises the following steps:
a) establishing information on who is located within the geographical area in question (300);
b) assigning load status on one or more relevant switches in the geographical area in question (200);
c) clarifying the content (510) of the message to be broadcast in the message exchange to the persons established in step a), and executing broadcasting (530);
d) monitoring the load on the one or more switches (610);
e) based on the revealed load status on said one or more switches, adjusting the number of simultaneous message exchanges upwards or downwards (620) until all persons defined in step a), have been contacted.

2. A method according to claim 1, **characterised in that** the steps are repeated as long as an undesirable event is of such a nature that it is important to be in control of the situation.

3. A method according to claim 1, **characterised in that** the method comprises an additional step before step c) involving establishment of a list, hereafter referred to as pri-list, with prioritised telephone numbers, hereafter referred to as pri-numbers, which should be given the highest priority when executing a message by calling via a switch.

4. A method according to claim 1, **characterised in that** step a) comprises generating lists of key persons when an undesirable event occurs, where the lists form the basis for what and to whom information should be broadcast.

5. A method according to claim 1, **characterised in that** step b) comprises a test transmission with simultaneous calls for assigning load status to the switch(es), which is used as a basis for implementing load-reducing measures.

6. A method according to claim 5, **characterised in that** step b) further comprises optimised control of the number of simultaneous calls of message exchanges, the number being increased or reduced as a result of the revealed load on a related switch and based on a set of rules.

7. A method according to claim 3, **characterised in that** the additional step comprises generating lists of relevant telephone numbers when an undesirable event occurs, where the lists form the basis for who should be given priority on the one or more switches in question.

8. A method according to claim 6, **characterised in that** the set of rules comprises the use of empirical data; geographical location, demographic data, time and which phase an undesirable event is in, which together will decide whether ongoing calls should be stopped or rerouted to a switch with a lower load.

9. A method according to claim 3, **characterised in that** the clarification of the one or more switches for broadcasting in step c) is based on the defined list of addresses and switch priorities, and comprises the use of batch or sequentially operated broadcasting, or broadcasting with a time window for acknowledgement.

10. A method according to claim 1, **characterised in that** step c) comprises arranging the content to be broadcast in such a manner that it is adapted to the specific format required for the relevant communication channel, and preparation for receipt of confirmation of broadcast message in order to be able to update the list of addresses and switch priorities for further follow-up.

11. A method according to claim 1, **characterised in that** step d) comprises assigning information on successful broadcasting, response from relevant receivers of the message and updating of the original pri-list that appeared at the start of the method.

12. A system comprising one or more switches in a fixed and/or mobile telephony network, and a processing device, **characterised in that** the processing device is arranged to carry out the method according to claims 1 to 11.

13. A computer program residing on a storage medium or in a computer memory, or generated as a signal carried on a propagation signal for execution of a processing device connected to a switch in a communication network,
**characterised in that** the program comprises a set of instructions arranged to carry out the method according to claims 1 to 11 by execution on the processing device.

## Patentansprüche

1. Verfahren zur optimierten Steuerung einer Verkehrslast in der Form von Meldungeaustauschungen auf einer oder mehreren Vermittlungen in einem festgelegten Telefon- und/oder Mobiltelefon-Kommunikationsnetzwerk zur maximalen Ausnutzung der Kapazität von der Vermittlung, wenn ein ungewünschtes Ereignis in einem spezifischen geografischen Bereich auftritt, **dadurch gekennzeichnet, dass** das Verfahren die folgenden Schritte enthält:
a) Aufbauen von einer Information darüber, wer sich innerhalb des in Frage stehenden geografischen Bereiches (300) befindet:
b) Zuweisen von einem Laststatus an eine oder mehrere relevante Vermittlungen in dem in Frage stehenden geografischen Bereich (200);
c) Aufklären des Inhalts (510) von der auszustrahlenden Meldung in dem Meldungsaustausch an die Personen, welche in Schritt a) aufgebaut sind, und Ausführen der Ausstrahlung (530);
d) Überwachen der Last auf der einen oder den mehreren Vermittlungen (610);
e) Einstellen, basierend auf dem offengelegten Laststatus auf der einen oder den mehreren Vermittlungen, von der Anzahl von gleichzeitigen MeldungsausLauschungen stromaufwärts oder stromabwärts (620), bis alle in Schritt a) bestimmten Personen kontaktiert wurden.

2. Verfahren nach Anspruch 1, **dadurch gekennzeichnet, dass** die Schritte solange wiederholt werden, bis ein ungewünschtes Ereignis von einer derartigen Art ist, dass dessen Steuerung von der Situation wichtig ist.

3. Verfahren nach Anspruch 1, **dadurch gekennzeichnet, dass** das Verfahren einen zusätzlichen Schritt vor Schritt c) enthält, welcher ein Aufbauen von einer Liste, welche im Folgenden als Pri-Liste bezeichnet wird, mit priorisierten Telefonnummern, welche im Folgenden als Pri-Nummern bezeichnet werden, enthält, welchen die höchste Priorität gegeben werden sollte, wenn eine Meldung durch einen Ruf über eine Vermittlung ausgeführt wird.

4. Verfahren nach Anspruch 1, **dadurch gekennzeichnet, dass** Schritt a) ein Erzeugen von Listen von Schlüsselpersonen enthält, wenn ein ungewünschtes Ereignis auftritt, wobei die Listen die Basis dafür ausbilden, für was und für wen die Information ausgestrahlt werden sollte.

5. verfahren nach Anspruch 1, **dadurch gekennzeichnet, dass** Schritt b) eine Testilbertragung mit gleichzeitigen Rufen zum Zuweisen eines Laststatus an die Vermittlung bzw. die Vermittlungen enthält, welche als eine Basis zur Implementierung von Lastreduktions-Messungen verwendet wird.

6. Verfahren nach Anspruch 5, **dadurch gekennzeichnet, dass** Schritt b) ferner eine optimierte Steuerung der Anzahl von gleichzeitigen Rufen von Meldungsaustauschungen enthält, wobei die Anzahl resultierend aus der offengelegten Last auf eine bezogene Vermittlung und basierend auf einem Satz von Regeln erhöht oder reduziert wird.

7. Verfahren nach Anspruch 3, **dadurch gekennzeichnet, dass** der zusätzliche Schritt ein Erzeugen von Listen von relevanten Telefonnummern enthält, wenn ein ungewünschtes Ereignis auftritt, wobei die Listen die Basis dafür bilden, wem auf der einen oder den mehreren in Frage stehenden Vermittlungen eine Priorität gegeben werden sollte.

8. Verfahren nach Anspruch 6, **dadurch gekennzeichnet, dass** der Satz von Regeln die Verwendung von empirischen Daten, dem geografischen Ort, demografischen Daten, der Zeit und zu welcher Phase ein ungewünschtes Ereignis vorliegt, enthält, welches zusammen entscheiden wird, ob anhaltende Rufe beendet oder an eine Vermittlung mit einer geringeren Last weitergeleitet werden sollten.

9. Verfahren nach Anspruch 3, **dadurch gekennzeichnet, dass** die Klarstellung von der einen oder den mehreren Vermittlungen zur Ausstrahlung in Schritt c) auf der bestimmten Liste von Adressen und Vermittlungs-Prioritäten basiert und die Verwendung von einem Stapel oder einer aufeinanderfolgend betriebenen Ausstrahlung oder die Ausstrahlung mit einem Zeitfenster zur Bestätigung enthält.

10. Verfahren nach Anspruch 1, **dadurch gekennzeichnet, dass** Schritt c) ein Anordnen des auszustrahlenden Inhaltes auf eine solche Art und Weise enthält, dass er auf das spezifische Format adaptiert ist, welches für den relevanten Kommunikationskanal, erforderlich ist, und ein Vorbereiten zum Empfang von einer Bestätigung von der Rundfunkmeldung enthält, um dazu in der Lage zu sein, die Liste von Adressen und Vermittlungs-Prioritaten zur weiteren Wiedervorlage zu aktualisieren.

11. Verfahren nach Anspruch 1, **dadurch gekennzeichnet, dass** Schritt d) ein Zuweisen von einer Information über eine erfolgreiche Ausstrahlung, ein Antworten von relevanten Empfänger von der Meldung und ein Aktualisieren von der ursprünglichen Pri-Liste, welche zu Beginn des Verfahrens erscheint, enthält.

12. System, welches eine oder mehrere Vermittlungen in einem festgelegten und/oder Mobiltelefon-Netzwerk und eine Verarbeitungsvorrichtung enthält, **dadurch gekennzeichnet, dass** die verarbeitungsvorrichtung dazu angeordnet ist, um das Verfahren nach Ansprüchen 1 bis 11 durchzuführen.

13. Computerprogramm, welches auf einem Speichermedium oder in einem Computerspeicher vorliegt oder als ein Signal, welches auf einem Übertragungssignal übertragen ist, zur Ausführung auf einer Verarbeitungsvörrichtung, welche mit einer Vermittlung in einem Rommunikationsnetzwerk verbunden ist, erzeugt ist, **dadurch gekennzeichnet, dass** das programm einen Satz von Anweisungen enthält, welche dazu angeordnet sind, um das Verfahren nach Ansprüchen 1 bis 11 durch Ausführung auf der Verarbeitungsvorrichtung durchzuführen.

## Revendications

1. Méthode pour un contrôle optimisé d'une charge de trafic, sous la forme d'échanges de messages, sur un ou plusieurs commutateur(s) dans un réseau de communication de téléphonie fixe et/ou de téléphone mobile pour une exploitation maximum de la capacité du commutateur lorsqu'un événement indésirable se produit dans une zone géographique spécifique, **caractérisée en ce que** la méthode comprend les étapes suivantes :
a) établir des informations sur qui est situé dans la zone géographique en question (300) ;
b) allouer un statut de chargement sur un ou plusieurs commutateur(s) cancerné(s) dans la zone géographique en question (200) ;
c) clarifier le contenu (510) du message devant être diffusé dans l'échange de messages aux personnes établies dans l'étape a), et exécuter la diffusion (530) ;
d) surveiller la charge sur l'un ou les plusieurs commutateur(s) (610) ;
e) sur la base du statut de chargement révélé sur ledit(lesdits) un ou plusieurs commutateurs, ajuster le nombre d'échanges de messages simultanés vers le haut ou vers le bas (620) jusqu'à ce que toutes les personnes définies dans l'étape a) aient été contactées.

2. Méthode selon la revendication 1, **caractérisée en ce que** les étapes sont répétées tant qu'un événement indésirable est de telle nature qu'il est important de contrôler la situation.

3. Méthode selon la revendication 1, **caractérisée en ce que** la méthode comprend une étape supplémentaire avant l'étape c), impliquer l'établissement d'une liste, désignés ci-après en tant que pri-liste, avec des numéros de téléphone par ordre de priorité, désignés ci-après par pri-numéros, auxquels on devrait donner la priorité la plus élevée lors de l'exécution d'un message en appelant via un commutateur.

4. Méthode selon la revendication 1, **caractérisée en ce que** l'étape a) comprend la génération de listes des personnes clés lorsqu'un événement indésirable se produit, où les listes forment la base de pour quoi et à qui les informations devraient être diffusées.

5. Méthode selon la revendication 1, **caractérisée en ce que** l'étape b) comprend une transmission de test avec des appels simultanés pour allouer un statut de charge au(x) commutateur(s), qui est utilisée comme une base pour mettre en oeuvre des mesures de réduction de charge.

6. Méthode selon la revendication 5, **caractérisée en ce que** l'étape b) comprend on outre un contrôle optimisé du nombre d'appels simultanés d'échanges de messages, le nombre étant augmenté ou réduit à la suite de la charge révélée sur un commutateur lié et sur la base d'un ensemble de règles.

7. Méthode selon la revendication 3, **caractérisée en ce que** l'étape supplémentaire comprend la génération de listes de numéros de téléphone concernés lorsqu'un événement indésirable se produit, où les listes forment la base pour qui devrait avoir la priorité sur l'un ou les plusieurs commutateurs en question.

8. Méthode selon la revendication 6, **caractérisée en ce que** l'ensemble de règles comprend l'utilisation de données empiriques ; un emplacement géographique, des données démographiques, du temps et dans quelle phase un événement indésirable se trouve, ce qui ensemble décidera si les appels en cours devraient être arrêtés ou réacheminés vers un commutateur avec une charge inférieure.

9. Méthode selon la revendication 3, **caractérisée en ce que** la clarification de l'un ou des plusieurs commutateur(s) pour une diffusion dans l'étape c) est basée sur la liste définie des adresses et des priorités du commutateur, et comprend l'utilisation d'un lot ou d'une diffusion utilisé(e) de façon séquentielle, ou d'une diffusion avec une fenêtre temporelle pour accuser réception.

10. Méthode selon la revendication 1, **caractérisée en ce que** l'étape c) comprend l'agencement du contenu devant être diffusé de telle manière qu'il est adapté au format spécifique requis pour le canal de communication concerné, et la préparation d'un reçu de confirmation d'un message de diffusion afin de pouvoir mettre à jour la liste des adresses et des priorités du commutateur pour un suivi supplémentaire.

11. Méthode selon la revendication 1, **caractérisée en ce que** l'étape d) comprend l'allocation d'informations sur la diffusion réussie, une réponse des destinataires concernés du message et une mise à jour de la pri-liste d'origine qui apparaissaient au début de la méthode.

12. Système comprenant un ou plusieurs commutateur(s) dans un réseau de téléphonie fixe et/ou mobile, et un dispositif de traitement, **caractérisé en ce que** le dispositif de traitement est agencé pour effectuer la méthode selon les revendications 1 à 11.

13. Programme informatique résidant sur un support de stockage ou dans une mémoire informatique, ou généré en tant que signal acheminé sur un signal de propagation pour une exécution d'un dispositif de traitement connecté à un commutateur dans un réseau de communication, **caractérisé en ce que** le programme comprend un ensemble d'instructions agencées pour mettre en oeuvre la méthode selon les revendications 1 à 11 au moyen d'une exécution sur le dispositif de traitement.
